# EUROPEAN PATENT APPLICATION

(11) **EP 4 621 593 A1**
(43) Date of publication of application: **24.09.2025**
(21) Application number: 25164575.0
(22) Date of filing: 18.03.2025
(51) Int. Cl.: G06F 16/28

(54) **DATA STORAGE METHODS AND APPARATUSES FOR GRAPH DATABASE**

(30) Priority: 18.03.2024 CN 202410311024
(71) Applicant: Alipay (Hangzhou) Information Technology Co., Ltd., Hangzhou, Zhejiang 310000 (CN)
(72) Inventor: TAO, Wu, Hangzhou, Zhejiang 310000 (CN)
(74) Representative: Fish & Richardson P.C.

(57) **Abstract**

One or more embodiments of this specification provide a data storage method and apparatus for a graph database. The method includes: obtaining graph data to be stored, where the graph data include retrieval information and attribute information corresponding to a graph data object, and the retrieval information is used to perform retrieval query on the graph data; storing the attribute information into a disk managed by a storage engine corresponding to the graph database, and obtaining a storage location of the attribute information on the disk; and further storing the retrieval information corresponding to the graph data object and the storage location into a memory managed by the storage engine, so that a user can query the graph data based on the retrieval information in the memory.

## Description

### TECHNICAL FIELD

One or more embodiments of this specification relate to the data processing field, and in particular, to data storage methods and apparatuses for a graph database.

### BACKGROUND

In a storage engine of some graph databases, to facilitate data query, graph data in the graph database are usually stored in memory managed by the storage engine. However, due to the limited storage space of memory, this approach inevitably limits the data scale of the graph database, making it difficult for the graph database to handle large-scale graph data analysis scenarios.

To alleviate this problem, in a related technology, all graph data can be stored in a disk managed by a storage engine, and only a disk address of the graph data on the disk is stored in memory. However, in this processing manner, in a data query process, I/O access needs to be frequently performed on the disk to read data, which seriously impacts query efficiency.

### SUMMARY

In view of this, one or more embodiments of this specification provide a data storage method and apparatus for a graph database, so as to alleviate a problem in a related technology.

To achieve the above-mentioned objective, one or more embodiments of this specification provide the following technical solutions:
According to a first aspect of one or more embodiments of this specification, a data storage method for a graph database is proposed, where the method includes: obtaining graph data to be stored, where the graph data include retrieval information and attribute information corresponding to a graph data object, and the retrieval information is used to perform retrieval query on the graph data; storing the attribute information into a disk managed by a storage engine corresponding to the graph database, and obtaining a storage location of the attribute information on the disk; and further storing the retrieval information corresponding to the graph data object and the storage location into a memory managed by the storage engine, so that a user can query the graph data based on the retrieval information in the memory.

According to a second aspect of one or more embodiments of this specification, a data storage apparatus for a graph database is proposed, including: a data acquisition module, configured to obtain graph data to be stored, where the graph data include retrieval information and attribute information corresponding to a graph data object, and the retrieval information is used to perform retrieval query on the graph data; a disk module, configured to store the attribute information into a disk managed by a storage engine corresponding to the graph database, and obtain a storage location of the attribute information on the disk; and a memory module, configured to further store the retrieval information corresponding to the graph data object and the storage location into a memory managed by the storage engine, so that a user can query the graph data based on the retrieval information in the memory.

According to a third aspect of one or more embodiments of this specification, an electronic device is proposed, including: a processor; and a memory, configured to store instructions executable by the processor; where the processor implements the method according to the first aspect by running the executable instructions.

According to a fourth aspect of one or more implementations of this specification, a computer-readable storage medium is provided, where computer instructions are stored on the computer-readable storage medium, and the instructions are executed by a processor to implement the steps of the method according to the first aspect.

Based on the above embodiments, on one hand, by storing the retrieval information corresponding to the graph data objects and the storage location of the attribute information included in the graph data on the disk in the memory managed by the storage engine, and saving the attribute information that occupies a large amount of storage space on the disk, users can quickly initiate queries for the graph data based on the retrieval information in memory. This reduces the likelihood of accessing the disk to read the graph data, and improving efficiency of querying the graph data. On the other hand, the memory managed by the storage engine does not need to store the attribute information included in the graph data, and needs to store only the retrieval information and the storage location that occupy a small amount of storage space. Therefore, a data size of a graph database is not limited, so the graph database can cope with a scenario of large-scale graph data analysis.

### BRIEF DESCRIPTION OF DRAWINGS

FIG. 1 is a schematic architectural diagram illustrating a data storage system for a graph database, according to an example embodiment.
FIG. 2 is a flowchart illustrating a data storage method for a graph database, according to an example embodiment.
FIG. 3 is a schematic diagram illustrating a graph database, according to an example embodiment.
FIG. 4 is a flowchart illustrating a data query method for a graph database, according to an example embodiment.
FIG. 5 is a schematic diagram illustrating a data storage apparatus for a graph database, according to an example embodiment.
FIG. 6 is a schematic diagram illustrating a data query apparatus for a graph database, according to an example embodiment.
FIG. 7 is a schematic structural diagram illustrating an electronic device, according to an example embodiment.

### DESCRIPTION OF EMBODIMENTS

Example embodiments are described in detail here, and examples of the example embodiments are presented in the accompanying drawings. When the following description relates to the accompanying drawings, unless specified otherwise, the same numbers in different accompanying drawings represent the same or similar elements. Implementations described in the following example embodiments do not represent all implementations consistent with one or more embodiments of this specification. On the contrary, the implementations are merely examples of apparatuses and methods that are described in the appended claims in detail and consistent with some aspects of one or more embodiments of this specification.

It is worthwhile to note that the steps of the corresponding method are not necessarily performed in the sequence shown and described in this specification in other embodiments. In some other embodiments, the method can include more or less steps than those described in this specification. In addition, a single step described in this specification may be broken down into multiple steps in other embodiments for description. However, the multiple steps described in this specification may also be combined into a single step for description in other embodiments.

To facilitate data query, a storage engine corresponding to a related graph database stores all graph data into a memory managed by the storage engine. Because storage space of the memory is limited, a data volume of the graph database is relatively small, and a scenario of large-scale graph data analysis cannot be coped with. To alleviate this problem, in a related technology, all graph data are stored into a disk managed by a storage engine, and a disk address of the graph data on the disk is stored in memory. For example, an cross-linked list approach is used. A pointer linked list is used to indicate a disk address of graph data in a disk. In this case, data query needs to frequently access the disk to read data, thereby seriously impacting query efficiency.

In view of this, this specification provides a data storage method for a graph database. Attribute information of a graph data object etc., in graph data, that need a large amount of storage space are stored into a disk managed by a storage engine corresponding to a graph database, and retrieval information used to perform retrieval query and corresponding to the graph data object, and a storage location of the graph data on the disk are stored into a memory managed by the storage engine, so that a user can query the graph data in the memory.

During implementation, graph data to be stored are obtained, where the graph data include retrieval information and attribute information corresponding to a graph data object, and the retrieval information is used to perform retrieval query on the graph data; the attribute information is stored into a disk managed by a storage engine corresponding to the graph database, and a storage location of the attribute information on the disk is obtained; and the retrieval information corresponding to the graph data object and the storage location are further stored into a memory managed by the storage engine, so that a user can query the graph data based on the retrieval information in the memory.

In the above-mentioned technical solution, on one hand, by storing the retrieval information corresponding to the graph data objects and the storage location of the attribute information included in the graph data on the disk in the memory managed by the storage engine, and saving the attribute information that occupies a large amount of storage space on the disk, users can quickly initiate queries for the graph data based on the retrieval information in memory. This reduces the likelihood of accessing the disk to read the graph data, and improving efficiency of querying the graph data. On the other hand, the memory managed by the storage engine does not need to store the attribute information included in the graph data, and needs to store only the retrieval information and the storage location that occupy a small amount of storage space. Therefore, a data size of a graph database is not limited, so the graph database can cope with a scenario of large-scale graph data analysis.

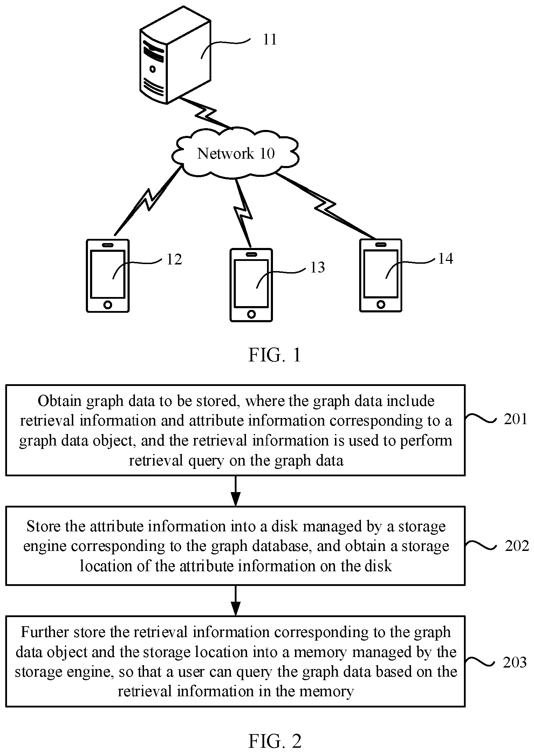

Referring to FIG. 1, FIG. 1 is a schematic architectural diagram illustrating a data storage system for a graph database, according to an example embodiment. As shown in FIG. 1, the system can include a network 10, a server 11, and several electronic devices, such as a terminal device 12, a terminal device 13, and a terminal device 14.

The server 11 can be a physical server that includes an independent host, or the server 11 can be a virtual server, a cloud server, etc. that is carried in a host cluster. The terminal device 12 to the terminal device 14 are only a type of electronic devices that can be used by a user. Actually, the user can further use, for example, the following types of electronic devices: a mobile phone, a tablet device, a notebook computer, a personal digital assistant (PDA), and a wearable device (such as smart glasses or a smart watch), which is not limited in one or more embodiments of this specification. The network 10 can include multiple types of wired or wireless networks.

In an embodiment, the server 11 can cooperate with the terminal device 12 to the terminal device 14. The terminal device 12 to the terminal device 14 can obtain graph data to be stored, and upload the obtained graph data to be stored to the server 11 by using the network 10, and then the server 11 processes the received graph data based on the data storage method for a graph database in this specification.

To make a person skilled in the art understand the technical solutions in this application better, the following clearly and comprehensively describes the technical solutions in some embodiments of this application with reference to the accompanying drawings in this specification.

Referring to FIG. 2, FIG. 2 is a data storage method for a graph database, according to an example embodiment. The method can include the following steps.

S201. Obtain graph data to be stored, where the graph data include retrieval information and attribute information corresponding to a graph data object, and the retrieval information is used to perform retrieval query on the graph data.

The obtained graph data to be stored can be divided into multiple types of data, for example, can include different types of data such as metadata, a label, a point, attribute information, a relationship, a relationship type, and a graph model. In this specification, the graph data to be stored can include graph data corresponding to each graph data object according to different graph data objects. The graph data corresponding to the graph data object can include retrieval information and attribute information corresponding to the graph data object. The retrieval information can be used to perform retrieval query on the graph data, for example, can be an object identifier used to indicate a graph data object, a label identifier used to indicate an object label of a feature of a graph data object, a type identifier used to indicate a type of a graph data object, etc. The object label can be used to indicate some type of attribute information of the graph data object.

The graph data object can include a node and an edge; and the graph data object can include node data corresponding to the node and edge data corresponding to the edge. The node data can include node retrieval information and node attribute information, and the node retrieval information can include a node identifier corresponding to the node, a node label, a first timestamp used to indicate a maintenance moment of the node, etc. The edge data can include edge retrieval information and edge attribute information, and the edge retrieval information can include an edge identifier corresponding to the edge, a node identifier of a start node of the edge, a node identifier of an end node of the edge, an edge label, a second timestamp used to indicate a maintenance moment of the edge, etc. The maintenance moment can be a creation moment, an update moment, etc. of the node or the edge.

S202. Store the attribute information into a disk managed by a storage engine corresponding to the graph database, and obtain a storage location of the attribute information on the disk.

After the graph data to be stored are obtained, graph data that needs a large amount of storage space, such as attribute data, in the graph data can be stored into the disk managed by the storage engine, and a storage location of graph data corresponding to each graph data object on the disk can be obtained. However, graph data in the graph data that needs store less space, for example, retrieval information including a label and a timestamp can be selectively stored into either the disk or the memory according to actual needs.

S203. Further store the retrieval information corresponding to the graph data object and the storage location into a memory managed by the storage engine, so that a user can query the graph data based on the retrieval information in the memory.

When graph data including the attribute information are stored into the disk, the retrieval information in the graph data and used for retrieval query can be further stored into the memory managed by the storage engine, and the obtained storage location of the graph data on the disk can also be stored into the memory.

In an implementation, the retrieval information stored in the memory and the graph data stored on the disk can be completely different, or can be partially the same. The retrieval information and the attribute information can be completely different, partially the same, or have a mapping relationship.

In an implementation, the retrieval information stored in the memory can change according to habits or needs of the user initiating query. For example, in an implementation, partial storage space can be reserved in the memory to store, as retrieval information, graph data of interest of the user into the reserved storage space, such as a timestamp, type information, some key attribute information in the attribute information, etc., according to needs of the user.

When a query request initiated by the user for the graph data is received, whether a target graph data object corresponding to the query request exists can be first queried in the memory. If more graph data of the target graph data object further need to be obtained, the graph data of the target graph data object can be read from the disk according to a storage location corresponding to the target graph data object and stored in the memory.

Based on the above-mentioned embodiments, on one hand, by storing the retrieval information corresponding to the graph data objects and the storage location of the attribute information included in the graph data on the disk in the memory managed by the storage engine, and saving the attribute information that occupies a large amount of storage space on the disk, users can quickly initiate queries for the graph data based on the retrieval information in memory. This reduces the likelihood of accessing the disk to read the graph data, and improving efficiency of querying the graph data. On the other hand, the memory managed by the storage engine does not need to store the attribute information included in the graph data, and needs to store only the retrieval information and the storage location that occupy a small amount of storage space. Therefore, a data size of a graph database is not limited, so the graph database can cope with a scenario of large-scale graph data analysis.

There can be various forms of graph data stored in the memory. The memory managed by the storage engine can include a predefined memory object used to store graph data. The memory object can be a data structure, for example, can be a variable, an array, a structure, or a pointer.

In an implementation, the retrieval information corresponding to the graph data object and the storage location can be further stored into the memory object defined in the memory managed by the storage engine. The memory object can correspond to the graph data object. The retrieval information stored in the memory object can be specific data content, or can be an identifier corresponding to the data content.

In an implementation, the graph data object includes a node and an edge; the graph data include node data corresponding to the node and edge data corresponding to the edge; the node data include node retrieval information and node attribute information; the node retrieval information can include a label identifier of a node label corresponding to the node, a first timestamp used to indicate a maintenance moment of the node, a node identifier, etc.; the edge data include edge retrieval information and edge attribute information; and the edge retrieval information can include a label identifier of an edge label corresponding to the edge, a second timestamp used to indicate a maintenance moment of the edge, an edge type, an edge identifier, etc.

In an implementation, a first memory object corresponding to the node and a second memory object corresponding to the edge can be predefined in the memory managed by the storage engine.

After the graph data to be stored are obtained, whether the node data corresponding to the node and the edge data corresponding to the edge exist in the graph data to be stored can be first determined. If it is determined that the node data corresponding to the node exist in the graph data to be stored, node data that include the node attribute information can be stored into the disk managed by the storage engine, and a first storage location of the node data on the disk can be obtained. Then, the node retrieval information corresponding to the node and the first storage location are stored into the first memory object corresponding to the node and in the memory managed by the storage engine.
If it is determined that the edge data corresponding to the edge exist in the graph data to be stored, edge data that include the edge attribute information can be stored into the disk managed by the storage engine, and a second storage location of the edge data on the disk can be obtained. Then, the edge retrieval information corresponding to the edge and the second storage location are stored into the second memory object corresponding to the edge and in the memory managed by the storage engine.

In an implementation, the node retrieval information includes a label identifier of a node label. If it is determined that the node data corresponding to the node exist in the graph data to be stored, node data that include the node attribute information can be stored into the disk managed by the storage engine, and a first storage location of the node data on the disk can be obtained. Then, the label identifier of the node label corresponding to the node and the first storage location are stored into the first memory object corresponding to the node and in the memory managed by the storage engine.

In an implementation, the edge retrieval information includes a label identifier of an edge node label. If it is determined that the edge data corresponding to the edge exist in the graph data to be stored, edge data that include the edge attribute information can be stored into the disk managed by the storage engine, and a second storage location of the edge data on the disk can be obtained. Then, the label identifier of the edge label corresponding to the edge and the second storage location that are stored into the second memory object corresponding to the edge and in the memory managed by the storage engine.

By defining a memory object corresponding to a graph data object in memory, and storing retrieval information corresponding to the graph data object and a storage location, data management and data query in the memory can be conveniently performed.

In an implementation, the predefined memory object used to store graph data and included in the memory managed by the storage engine can be an array, and a first array corresponding to the node and a second array corresponding to the edge are predefined in the memory managed by the storage engine. An array subscript of the first array corresponding to the node is a node identifier of the node; an array subscript of the second array corresponding to the edge is a node identifier of a start node of the edge; and the first array is used to store the node retrieval information corresponding to the node, and the second array is used to store the edge retrieval information corresponding to the edge. A node identifier that can be used as an array subscript can be a numeric ID obtained after normalization processing is performed on identification data corresponding to the node, for example, the node identifier can be an integer (int) value.

In an implementation, after the graph data to be stored are obtained, whether the node data corresponding to the node and the edge data corresponding to the edge exist in the graph data to be stored can be first determined. If the node data corresponding to the node exist in the graph data to be stored, node data that include the node attribute information can be stored into the disk managed by the storage engine, and a first storage location of the node data on the disk can be obtained. Then, the node retrieval information corresponding to the node and the first storage location are stored into the first array corresponding to the node and in the memory managed by the storage engine.
If it is determined that the edge data corresponding to the edge exist in the graph data to be stored, edge data that include the edge attribute information can be stored into the disk managed by the storage engine, and a second storage location of the edge data on the disk can be obtained. Then, the edge retrieval information corresponding to the edge and the second storage location are stored into the second array corresponding to the edge and in the memory managed by the storage engine.

In an implementation, the node retrieval information includes a label identifier of a node label. If it is determined that the node data corresponding to the node exist in the graph data to be stored, node data that include the node attribute information can be stored into the disk managed by the storage engine, and a first storage location of the node data on the disk can be obtained. Then, the label identifier of the node label corresponding to the node and the first storage location are stored into the first array corresponding to the node and in the memory managed by the storage engine.

In an implementation, the edge retrieval information includes a label identifier of an edge node label. If it is determined that the edge data corresponding to the edge exist in the graph data to be stored, edge data that include the edge attribute information can be stored into the disk managed by the storage engine, and a second storage location of the edge data on the disk can be obtained. Then, the label identifier of the edge label corresponding to the edge and the second storage location that are stored into the second array corresponding to the start node of the edge and in the memory managed by the storage engine.

The label identifier of the node label stored in the first array and the identifier label of the edge label stored in the second array can be numeric IDs obtained after normalization processing is performed on identification data corresponding to the node label and the edge label. For example, the first array and the second array can be long integer arrays long[], and the label identifier can be a long integer value.

Correspondingly, the first storage location stored in the first array and the second storage location stored in the second array can alternatively be numeric IDs obtained after normalization processing is performed, for example, can be long values.

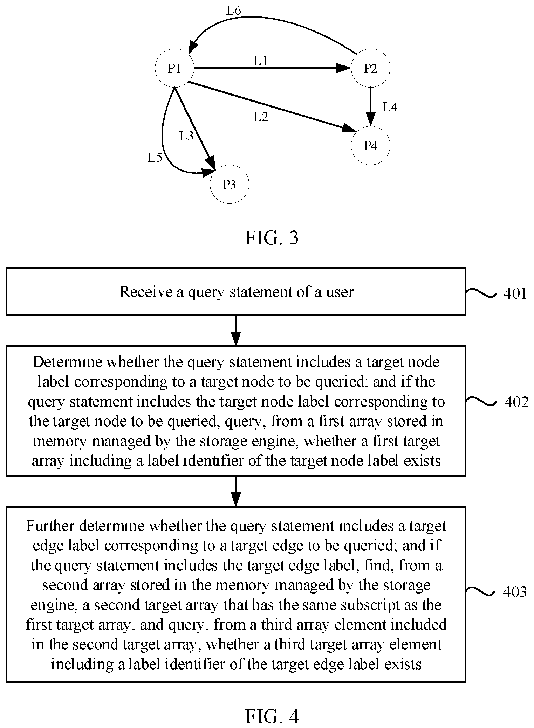

For example, as shown in FIG. 3, the graph data include four nodes P1, P2, P3, and P4 and six edges L1, L2, L3, L4, L5, and L6, and node identifiers corresponding to the nodes P1, P2, P3, and P4 are 1, 2, 3, and 4 respectively. First arrays arr1[] respectively corresponding to nodes can be defined in the memory, that is, four first arrays are defined, and corresponding node identifiers are used as array subscriptions arr1[1], arr1[2], arr1[3], and arr1[4] of the first arrays. The first array arr1[1] is used to store a label identifier of a node label corresponding to the node P1 and a first storage location corresponding to the node P1. The first array arr1[2] is used to store a label identifier of a node label corresponding to the node P2 and a first storage location corresponding to the node P2. The first array arr1[3] is used to store a label identifier of a node label corresponding to the node P3 and a first storage location corresponding to the node P3. The first array arr1[4] is used to store a label identifier of a node label corresponding to the node P4 and a first storage location corresponding to the node P4. Second arrays arr2[] respectively corresponding to edges can be further defined in the memory, and start nodes of six edges L1, L2, L3, L4, L5, and L6 are respectively P1 and P2. In this case, two second arrays can be defined, and node identifiers of corresponding start nodes are used as array subscriptions arr2[1] and arr2[2] of the second arrays, where the second array arr2[1] is used to store label identifiers of edge labels corresponding to the edges L1, L2, L3, and L5 and second storage locations corresponding to the edges L1, L2, L3, and L5; and the second array arr2[2] is used to store label identifiers of edge labels corresponding to the edges L4 and L6 and second storage locations corresponding to the edges L4 and L6.

The first array corresponding to the node and the second array corresponding to the edge are defined in the memory, and the label identifier of the node label corresponding to the node and the first storage location and the label identifier of the edge label corresponding to the edge and the second storage location are separately stored, which can facilitate data management and data query in the memory, and save memory space, so more data can be stored in the memory. In addition, data such as a label stored in the memory can be efficiently compressed by using a long integer array.

The first array corresponding to the node and the second array corresponding to the start node of the edge that are defined in the memory can further define a composition manner of each array element in the first array and the second array according to actual needs.

In an implementation, the first array can include a first array element and a second array element, the first array element is used to store node retrieval information corresponding to the node, and the second array element is used to store the first storage location.

In an implementation, the node retrieval information includes a label identifier of a node label, and the first array element can be used to store the label identifier of the node label corresponding to the node.

In an implementation, node data that include node attribute information can be stored in a first file of the disk, and a size upper limit of the first file can be set according to actual needs, for example, can be set to 256 M or 512 M, and a file sequence number of the first file continuously increases. After the node data are stored into the first file on the disk, the obtained first storage location can include a file identifier of the first file in which the node data are stored on the disk and an offset of the node data in the first file, where the file identifier of the first file can be a numeric ID obtained after normalization processing is performed, for example, can be a file sequence number of the first file. The offset is a numeric ID obtained after normalization processing is performed, for example, can be a bit quantity.

In an implementation, the node retrieval information can further include a first timestamp corresponding to a maintenance moment of the node, and correspondingly, the first array element included in the first array can be further used to store the first timestamp. The first timestamp can be a numeric ID obtained after normalization processing is performed on identification data corresponding to time.

In an implementation, the first array element can be a long field obtained after a label identifier label1 of the node label and the first timestamp time1 are encoded, for example, can be a long field obtained by concatenating the label identifier label1 and the first timestamp time1. For example, a format is as follows: |label1(8)|time1(56)|, the label identifier label1 can be used as the first 8 bits of the first array element, and the first timestamp time1 can be used as the last 56 bits of the first array element.

Correspondingly, the second array element can be a long field obtained after a file identifier fid1 of the first file and the offset offset1 of the first file are encoded, for example, can be a long field obtained by concatenating the file identifier fid1 and the offset offset1. For example, a format is as follows: |fid(int)|offset(int)|, the file identifier fid1 can be used as the first 32 bits of the second array element, and the offset offset1 can be used as the last 32 bits of the second array element.

It can be understood that, in the memory, one node in the graph data can be represented by two long fields: one array element related to attribute information and one array element related to other information.

In an implementation, when the defined first array is insufficient, a new first array can be created for expansion.

In an implementation, an array list List<long[]> including the first array can also be defined in the memory.

In an implementation, the second array can include at least one third array element respectively corresponding to at least one edge connected to the start node, and the third array element can be used to store the edge retrieval information and the second storage location.

In an implementation, the edge retrieval information includes a label identifier of an edge node label; and the third array element can be used to store the label identifier of the edge label corresponding to the edge and the second storage location.

In an implementation, edge data that include edge attribute information can be stored in a second file on the disk and used to store the edge data. An upper limit of the second file can be set according to actual needs, for example, can be set to 256 M or 512 M, and a file sequence number of the second file continuously increases. After the edge data that include the edge attribute information are stored into the second file on the disk, the obtained second storage location can include a file identifier of a second file that stores the edge data corresponding to the edge on the disk and an offset of the edge data in the second file, where the file identifier of the second file can be a numeric ID obtained after normalization processing is performed, for example, a file sequence number of the second file. The offset is a numeric ID obtained after normalization processing is performed, for example, can be a bit quantity.

In an implementation, the third array element can be a long field obtained after the label identifier label2 of the edge label, the file identifier fid2 of the second file, and the offset offset2 in the second file are encoded, for example, a long field can be obtained by concatenating the label identifier label2, the file identifier fid2, and the offset offset2. For example, a format is as follows: |label(8)|fid(24)|offset(32)|, the label identifier label2 is used as the first 8 bits of the third array element, the file identifier fid2 is used as the middle 24 bits of the third array element, and the offset offset2 is used as the last 32 bits of the third array element.

It can be understood that one long field in the memory can represent one edge in the graph data.

In an implementation, when a defined second array corresponding to any start node is not sufficient, a second array can be created for expansion.

In an implementation, an array list List<long[]> including the second array can also be defined in the memory.

Because each node can connect to multiple edges, edge data in the graph data are often more than node data. To find needed edge data on the disk more quickly, in an implementation, multiple second files respectively corresponding to different edge labels can be stored on the disk. When obtained graph data to be stored include edge data, edge data that include the edge attribute information can be stored into a second file on the disk managed by the storage engine and corresponding to the edge label; and correspondingly, when edge data are queried on the disk based on the second storage location in the memory, edge data located in the second storage location can be queried from the second file corresponding to the edge label.

Second files respectively corresponding to different edge labels are divided on the disk by using edge labels. Therefore, it is possible to avoid reading all second files when querying the edge data, and it is only necessary to read second files corresponding to the edge labels, thus improving efficiency of reading the edge data from the disk.

In an implementation, in a case in which a query statement of a user is received, in response to receiving the query statement entered by the user, whether the query statement includes a first filtering condition corresponding to a target node to be queried can be first determined. The first filtering condition can include one or a combination of multiple of the following conditions: a target node label corresponding to the target node, a target time range, and a filtering condition for other node data, for example, a filtering condition for node attribute information.

In an implementation, if the first filtering condition includes the target node label corresponding to the target node to be queried, it is queried, from the first array stored in the memory managed by the storage engine, whether a first target array including a label identifier of the target node label exists; and if the first target array including the label identifier of the target node label is found in the memory, it can be determined that the first target array is a first array corresponding to the target node, and a subscript of the first target array is a node identifier of the target node.

In an implementation, if the first filtering condition includes the target node label corresponding to the target node to be queried and the target time range, it can be queried, from the first array stored in the memory managed by the storage engine, whether there is a first target array including a label identifier of the target node label and including a first timestamp within the target time range. If the first target array including the label identifier of the target node label and including a first timestamp within the target time range is found in the memory, it can be determined that the first target array is a first array corresponding to the target node, and a subscript of the first target array is a node identifier of the target node.

In an implementation, after the first target array is found from the first array stored in the memory, if the first filtering condition further includes the filtering condition for other node data, a first target storage location stored in the first target array can be obtained, the disk is further accessed, node data corresponding to the target node stored on the disk are read based on the first target storage location, and the target node is selected, based on the filtering condition for other node data, from nodes corresponding to the first target array.

In an implementation, in response to finding the first target array or the target node in the memory, it can further be determined whether the query statement includes a second filtering condition corresponding to a target edge to be queried. The second filtering condition can include at least one of the following: a target edge label, a filtering condition for other edge data, for example, a filtering condition for edge attribute information, or a filtering condition for an edge type.

In an implementation, if the second filtering condition includes the target edge label corresponding to the target edge to be queried, a second target array that has the same subscript as the first target array, or a second target array that uses a node identifier of the target node as a subscript is queried from the second array stored in the memory managed by the storage engine. If the second target array is found from the second array stored in the memory, a third target array element that includes a label identifier of the target edge label is queried from a third array element included in the second target array. If the third target array element is found, it can be determined that the third target array element is a third array element corresponding to the target edge.

In an implementation, after the third target array element is found, if the second filtering condition further includes the filtering condition for other edge data, a second target storage location stored in the third target array element can be obtained, the disk is further accessed, edge data corresponding to the target edge stored on the disk are read based on the second target storage location, and the target edge is selected, based on the filtering condition for other edge data, from edges corresponding to the third target array element.

Based on the above-mentioned embodiment, when a query statement initiated by a user is received, first a first target array corresponding to a target node is queried from a first array, and then a third target array element corresponding to a target edge is queried from a second target array that has the same subscript as the first target array, thereby ensuring graph data query efficiency.

Referring to FIG. 4, FIG. 4 is a data query method for a graph database, according to an example embodiment. A memory managed by a storage engine corresponding to the graph database includes a first array corresponding to a node and a second array corresponding to an edge that are predefined. An array subscript of the first array corresponding to the node is a node identifier of the node; an array subscript of a second array corresponding to the edge is a node identifier of a start node of the edge. The first array is used to store a label identifier of a node label corresponding to the node and a first storage location, in a disk managed by the storage engine, of node data corresponding to the node, and the second array is used to store a label identifier of an edge label corresponding to the edge and a second storage location, on the disk, of edge data corresponding to the edge. The data query method can include the following steps.

S401. Receive a query statement of a user.
S402. Determine whether the query statement includes a target node label corresponding to a target node to be queried; and if the query statement includes the target node label corresponding to the target node to be queried, query, from a first array stored in memory managed by the storage engine, whether a first target array including a label identifier of the target node label exists.
S403. Further determine whether the query statement includes a target edge label corresponding to a target edge to be queried; and if the query statement includes the target edge label, find, from a second array stored in the memory managed by the storage engine, a second target array that has the same subscript as the first target array, and query, from a third array element included in the second target array, whether a third target array element including a label identifier of the target edge label exists.

Steps S401-S403 can implement content about a data query part in the above-mentioned data storage method embodiment, and repeated parts are not described here again.

Corresponding to the above-mentioned embodiment of the data storage method for a graph database, this application further provides an embodiment of a data storage apparatus for a graph database.

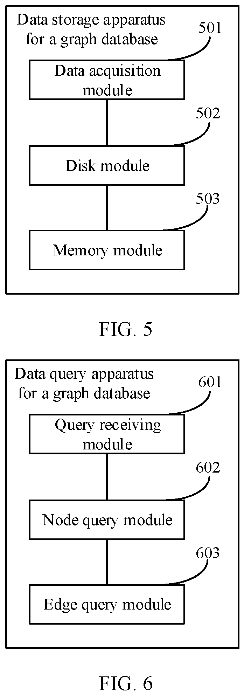

As shown in FIG. 5, the data storage apparatus for a graph database includes a data acquisition module 501, a disk module 502, and a memory module 503.

The data acquisition module 501 is configured to obtain graph data to be stored, where the graph data include retrieval information and attribute information corresponding to a graph data object, and the retrieval information is used to perform retrieval query on the graph data; the disk module 502 is configured to store the attribute information into a disk managed by a storage engine corresponding to the graph database, and obtain a storage location of the attribute information on the disk; and the memory module 503 is configured to further store the retrieval information corresponding to the graph data object and the storage location into a memory managed by the storage engine, so that a user can query the graph data based on the retrieval information in the memory.

Further, the memory managed by the storage engine includes a predefined memory object used to store graph data.
The memory module 503 is configured to further store the retrieval information corresponding to the graph data object and the storage location into the memory object defined in the memory managed by the storage engine.

Further, the graph data object includes a node and an edge; the graph data include node data corresponding to the node and edge data corresponding to the edge; the node data include node retrieval information and node attribute information; the edge data include edge retrieval information and edge attribute information; and a first memory object corresponding to the node and a second memory object corresponding to the edge are predefined in the memory managed by the storage engine.
Further, the disk module 502 is configured to: separately store the node attribute information and the edge attribute information into the disk managed by the storage engine, and obtain a first storage location of the node attribute information on the disk and a second storage location of the edge attribute information on the disk; and the memory module 503 is configured to: store the node retrieval information corresponding to the node and the first storage location into the first memory object, and store a label identifier of the edge retrieval information corresponding to the edge and the second storage location into the second memory object.

Further, the memory object is an array; an array subscript of a first array predefined in the memory managed by the storage engine and corresponding to the node is a node identifier of the node; an array subscript of a second array predefined in the memory managed by the storage engine and corresponding to the edge is a node identifier of a start node of the edge; and the node identifier is a numeric ID obtained after normalization processing is performed on identification data corresponding to the node; and the memory module 503 is configured to: store the node retrieval information corresponding to the node and the first storage location into the first array in the memory managed by the storage engine and corresponding to the node, and store the edge retrieval information corresponding to the edge and the second storage location into the second array in the memory managed by the storage engine and corresponding to the edge, where the first storage location and the second storage location are numeric IDs obtained after normalization processing is performed.

Further, the first array includes a first array element and a second array element, the first array element is used to store the node retrieval information corresponding to the node, and the second array element is used to store the first storage location; the first storage location includes a file identifier of a first file on the disk and used to store the node attribute information of the node and an offset of the node attribute information in the first file; the second array includes at least one third array element respectively corresponding to at least one edge connected to the start node, and the third array element is used to store the edge retrieval information and the second storage location; the second storage location includes a file identifier of a second file on the disk and used to store the edge attribute information of the edge and an offset of the edge attribute information in the second file; the file identifier is a numeric ID obtained after normalization processing is performed; and the offset is a numeric ID obtained after normalization processing is performed.

Further, the node retrieval information includes a label identifier of a node label; the edge retrieval information includes a label identifier of an edge label; the first array element is used to store a label identifier of a node label corresponding to the node; and the third array element is used to store a label identifier of an edge label corresponding to the edge and the second storage location.

Further, the disk stores multiple second files respectively corresponding to different edge labels; and the disk module 502 is configured to store the edge attribute information into a second file on the disk managed by the storage engine and corresponding to the edge label.

Further, the memory module 503 is further configured to: in response to receiving a query statement entered by the user, determine whether the query statement includes a target node label corresponding to a target node to be queried; and if the query statement includes the target node label corresponding to the target node to be queried, query, from the first array stored in the memory managed by the storage engine, whether a first target array including a label identifier of the target node label exists; and in response to finding the first target array in the memory, further determine whether the query statement includes a target edge label corresponding to a target edge to be queried; and if the query statement includes the target edge label, find, from the second array stored in the memory managed by the storage engine, a second target array that has the same subscript as the first target array, and query, from a third array element included in the second target array, whether a third target array element including a label identifier of the target edge label exists.

Further, the node retrieval information further includes a first timestamp corresponding to a maintenance moment of the node; the first array element further stores the first timestamp; and the first timestamp is a numeric ID obtained after normalization processing is performed on identification data corresponding to time; and the memory module 503 is configured to determine whether the query statement includes the target node label corresponding to the target node to be queried and a target time range; and if the query statement includes the target node label and the target time range, query, from the first array stored in the memory managed by the storage engine, whether there is a first target array including the target node label and including a first timestamp within the target time range.

Further, the disk module 502 is further configured to: obtain a first target storage location stored in the first target array, and read, based on the first target storage location, node data corresponding to the target node stored on the disk.

Further, the disk module 502 is further configured to: obtain a second target storage location stored in the third target array element, and read, based on the second target storage location, edge data corresponding to the target edge stored on the disk.

Corresponding to the above-mentioned embodiment of the data query method for a graph database, this application further provides an embodiment of a data query apparatus for a graph database.

As shown in FIG. 6, the data query apparatus for a graph database includes a query receiving module 601, a node query module 602, and an edge query module 603.

The query receiving module 601 is configured to receive a query statement of a user; the node query module 602 is configured to: determine whether the query statement includes a target node label corresponding to a target node to be queried; and if the query statement includes the target node label corresponding to the target node to be queried, query, from the first array stored in the memory managed by the storage engine, whether a first target array including a label identifier of the target node label exists; and the edge query module 603 is configured to: further determine whether the query statement includes a target edge label corresponding to a target edge to be queried; and if the query statement includes the target edge label, find, from the second array stored in the memory managed by the storage engine, a second target array that has the same subscript as the first target array, and query, from a third array element included in the second target array, whether a third target array element including a label identifier of the target edge label exists.

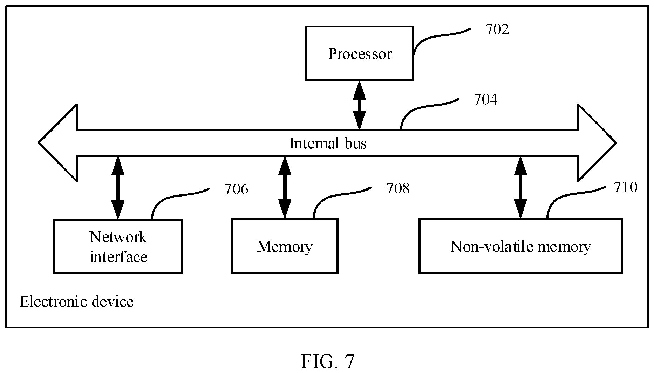

FIG. 7 is schematic structural diagram illustrating a device, according to an example embodiment. Referring to FIG. 7, in terms of hardware, the device includes a processor 702, an internal bus 704, a network interface 706, a memory 708, and a nonvolatile memory 710, and certainly may further include other needed hardware. One or more embodiments of this specification can be implemented in a software-based way. For example, the processor 702 reads a corresponding computer program from the nonvolatile memory 710 into the memory 708, and then runs the computer program. Certainly, in addition to a software implementation, one or more embodiments of this specification do not exclude another implementation, for example, a logic device or a combination of hardware and software. That is, an execution body of the following processing procedure is not limited to each logical unit, and can be hardware or a logic device.

The system, apparatus, module, or unit illustrated in the above-mentioned embodiments can be implemented by using a computer chip or an entity, or can be implemented by using a product having a certain function. A typical implementation device is a computer, and a specific form of the computer can be a personal computer, a laptop computer, a cellular phone, a camera phone, a smartphone, a personal digital assistant, a media player, a navigation device, an email receiving/sending device, a game console, a tablet computer, a wearable device, or a combination of any several of these devices.

In typical configuration, the computer includes one or more processors (CPU), an input/output interface, a network interface, and a memory.

The memory may include a non-persistent memory, a random access memory (RAM), and/or a non-volatile memory in a computer-readable medium, for example, a read-only memory (ROM) or a flash read-only memory (flash RAM). The memory is an example of the computer readable medium.

The computer-readable medium includes persistent, non-persistent, movable, and unmovable media that can store information by using any method or technology. The information can be a computer-readable instruction, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a disk memory, a quantum memory, a graphene-based storage medium, another magnetic storage device, or any other non-transmission medium. The computer storage medium can be configured to store information that can be accessed by a computing device. Based on the definition in this specification, the computer-readable medium does not include transitory computer-readable media (transitory media) such as a modulated data signal and carrier.

It is worthwhile to note that the user information (including but not limited to user equipment information, user personal information, etc.) and the data (including but not limited to data used for analysis, stored data, displayed data, etc.) used in this application are information and data that are authorized by users or that are fully authorized by all parties, and the related data need to be collected, used, and processed in compliance with relevant laws, regulations, and standards of relevant countries and regions, and corresponding operation entries are provided for users to choose to authorize or reject.

It is worthwhile to note that the terms "include", "contain", or any other variant thereof are intended to cover a non-exclusive inclusion, so a process, a method, a product, or a device that includes a list of elements not only includes those elements but also includes other elements which are not expressly listed, or further includes elements inherent to such process, method, product, or device. In a case without more restrictions, for an element limited by the statement "include a...", a process, method, product, or device that includes the element can further include another same element.

Specific embodiments of this specification are described above. Other embodiments fall within the scope of the appended claims. In some situations, the actions or steps described in the claims can be performed in an order different from the order in the embodiments and the desired results can still be achieved. In addition, the process depicted in the accompanying drawings does not necessarily need a particular execution order to achieve the desired results. In some implementations, multi-tasking and concurrent processing are feasible or may be advantageous.

Terms used in one or more embodiments of this specification are merely used to describe specific embodiments, and are not intended to limit the one or more embodiments of this specification. The terms "a" and "the" of singular forms used in one or more embodiments of this specification and the appended claims are also intended to include plural forms, unless otherwise specified in the context clearly. It should be further understood that the term "and/or" used in this specification indicates and includes any or all possible combinations of one or more associated listed items.

It should be understood that although terms "first", "second", "third", etc. may be used in one or more embodiments of this specification to describe various types of information, the information is not limited to these terms. These terms are merely used to differentiate between information of the same type. For example, without departing from the scope of one or more embodiments of this specification, first information can also be referred to as second information, and similarly, the second information can be referred to as the first information. Depending on the context, for example, the word "if" used here can be explained as "while", "when", or "in response to determining".

The above-mentioned descriptions are only example embodiments of one or more embodiments of this specification, but are not intended to limit the one or more embodiments of this specification. Any modification, equivalent replacement, improvement, etc. made without departing from the spirit and principle of the one or more embodiments of this specification shall fall within the protection scope of the one or more embodiments of this specification.

### EXAMPLES

1. A data storage method for a graph database, wherein the method comprises:
   obtaining graph data to be stored, wherein the graph data comprise retrieval information and attribute information corresponding to a graph data object, and the retrieval information is used to perform retrieval query on the graph data;
   storing the attribute information into a disk managed by a storage engine corresponding to the graph database, and obtaining a storage location of the attribute information on the disk; and
   further storing the retrieval information corresponding to the graph data object and the storage location into a memory managed by the storage engine, so that a user can query the graph data based on the retrieval information in the memory.
2. The method according to example 1, wherein the memory managed by the storage engine comprises a predefined memory object used to store graph data; and
   the further storing the retrieval information corresponding to the graph data object and the storage location into a memory managed by the storage engine comprises:
   further storing the retrieval information corresponding to the graph data object and the storage location into the memory object defined in the memory managed by the storage engine.
3. The method according to example 2, wherein the graph data object comprises a node and an edge; the graph data comprise node data corresponding to the node and edge data corresponding to the edge; the node data comprise node retrieval information and node attribute information; and the edge data comprise edge retrieval information and edge attribute information.
4. The method according to example 3, wherein a first memory object corresponding to the node and a second memory object corresponding to the edge are predefined in the memory managed by the storage engine;
   the storing the attribute information into a disk managed by a storage engine corresponding to the graph database, and obtaining a storage location of the attribute information on the disk comprises:
   separately storing the node attribute information and the edge attribute information into the disk managed by the storage engine, and obtaining a first storage location of the node attribute information on the disk and a second storage location of the edge attribute information on the disk; and
   the further storing the retrieval information corresponding to the graph data object and the storage location into the memory object defined in the memory managed by the storage engine comprises:
      storing the node retrieval information corresponding to the node and the first storage location into the first memory object, and storing the edge retrieval information corresponding to the edge and the second storage location into the second memory object.
5. The method according to example 4, wherein the memory object is an array; an array subscript of a first array predefined in the memory managed by the storage engine and corresponding to the node is a node identifier of the node; an array subscript of a second array predefined in the memory managed by the storage engine and corresponding to the edge is a node identifier of a start node of the edge; and the node identifier is a numeric **ID** obtained after normalization processing is performed on identification data corresponding to the node; and
   the storing the node retrieval information corresponding to the node and the first storage location into the first memory object, and storing the edge retrieval information corresponding to the edge and the second storage location into the second memory object comprises:
   storing the node retrieval information corresponding to the node and the first storage location into the first array in the memory managed by the storage engine and corresponding to the node, and storing the edge retrieval information corresponding to the edge and the second storage location into the second array in the memory managed by the storage engine and corresponding to the edge, wherein the first storage location and the second storage location are numeric IDs obtained after normalization processing is performed.
6. The method according to example 5, wherein the first array comprises a first array element and a second array element, the first array element is used to store the node retrieval information corresponding to the node, and the second array element is used to store the first storage location; the first storage location comprises a file identifier of a first file on the disk and used to store the node attribute information of the node and an offset of the node attribute information in the first file; the second array comprises at least one third array element respectively corresponding to at least one edge connected to the start node, and the third array element is used to store the edge retrieval information and the second storage location; the second storage location comprises a file identifier of a second file on the disk and used to store the edge attribute information of the edge and an offset of the edge attribute information in the second file; the file identifier is a numeric **ID** obtained after normalization processing is performed; and the offset is a numeric ID obtained after normalization processing is performed.
7. The method according to example 6, wherein the node retrieval information comprises a label identifier of a node label; the edge retrieval information comprises a label identifier of an edge label; the first array element is used to store a label identifier of a node label corresponding to the node; and the third array element is used to store a label identifier of an edge label corresponding to the edge and the second storage location.
8. The method according to example 7, wherein the disk stores multiple second files respectively corresponding to different edge labels; and
   the storing the edge attribute information into the disk managed by the storage engine comprises:
   storing the edge attribute information into a second file on the disk managed by the storage engine and corresponding to the edge label.
9. The method according to example 7 or 8, wherein the method further comprises:
   in response to receiving a query statement entered by the user, determining whether the query statement comprises a target node label corresponding to a target node to be queried; and if the query statement comprises the target node label corresponding to the target node to be queried, querying, from the first array stored in the memory managed by the storage engine, whether a first target array comprising a label identifier of the target node label exists; and
   in response to finding the first target array in the memory, further determining whether the query statement comprises a target edge label corresponding to a target edge to be queried; and if the query statement comprises the target edge label, finding, from the second array stored in the memory managed by the storage engine, a second target array that has the same subscript as the first target array, and querying, from a third array element comprised in the second target array, whether a third target array element comprising a label identifier of the target edge label exists.
10. The method according to example 9, wherein the node retrieval information further comprises a first timestamp corresponding to a maintenance moment of the node; the first array element further stores the first timestamp; and the first timestamp is a numeric ID obtained after normalization processing is performed on identification data corresponding to time; and
   the determining whether the query statement comprises a target node label corresponding to a target node to be queried; and if the query statement comprises the target node label, querying, from the first array stored in the memory managed by the storage engine, whether a first target array comprising a label identifier of the target node label exists comprises:
   determining whether the query statement comprises the target node label corresponding to the target node to be queried and a target time range; and
   if the query statement comprises the target node label and the target time range, querying, from the first array stored in the memory managed by the storage engine, whether there is a first target array comprising the target node label and comprising a first timestamp within the target time range.
11. The method according to example 9, wherein after the first target array is found from the first array stored in the memory, the method further comprises:
   obtaining a first target storage location stored in the first target array, and reading, based on the first target storage location, node data corresponding to the target node stored on the disk.
12. The method according to example 9, wherein after the third target array element is found from the third array element comprised in the second target array, the method further comprises:
   obtaining a second target storage location stored in the third target array element, and reading, based on the second target storage location, edge data corresponding to the target edge stored on the disk.
13. A data storage apparatus for a graph database, comprising:
   a data acquisition module, configured to obtain graph data to be stored, wherein the graph data comprise retrieval information and attribute information corresponding to a graph data object, and the retrieval information is used to perform retrieval query on the graph data;
   a disk module, configured to store the attribute information into a disk managed by a storage engine corresponding to the graph database, and obtain a storage location of the attribute information on the disk; and
   a memory module, configured to further store the retrieval information corresponding to the graph data object and the storage location into a memory managed by the storage engine, so that a user can query the graph data based on the retrieval information in the memory.
14. An electronic device, comprising:
   a processor; and
   a memory, configured to store instructions executable by the processor; wherein
      the processor runs the executable instructions to implement the method according to any one of examples 1 to 12.
15. A computer-readable storage medium on which computer instructions are stored, wherein steps of the method according to any one of examples 1 to 12 are implemented when the instructions are executed by a processor.

## Claims

1. A method for data storage for a graph database, wherein the method comprises:
obtaining (S201) graph data to be stored, wherein the graph data comprise retrieval information and attribute information corresponding to a graph data object, and the retrieval information is used to perform retrieval query on the graph data;
storing (S202) the attribute information into a disk managed by a storage engine corresponding to the graph database, and obtaining a storage location of the attribute information on the disk; and
further storing (S203) the retrieval information corresponding to the graph data object and the storage location into a memory managed by the storage engine, so that a user can query the graph data based on the retrieval information in the memory.

2. The method according to claim 1, wherein the memory managed by the storage engine comprises a predefined memory object used to store graph data; and
further storing (S203) the retrieval information corresponding to the graph data object and the storage location into a memory managed by the storage engine comprises:
further storing the retrieval information corresponding to the graph data object and the storage location into the memory object defined in the memory managed by the storage engine.

3. The method according to claim 2, wherein the graph data object comprises a node and an edge; the graph data comprise node data corresponding to the node and edge data corresponding to the edge; the node data comprise node retrieval information and node attribute information; and the edge data comprise edge retrieval information and edge attribute information.

4. The method according to claim 3, wherein a first memory object corresponding to the node and a second memory object corresponding to the edge are predefined in the memory managed by the storage engine;
storing (S202) the attribute information into a disk managed by a storage engine corresponding to the graph database, and obtaining a storage location of the attribute information on the disk comprises:
separately storing the node attribute information and the edge attribute information into the disk managed by the storage engine, and obtaining a first storage location of the node attribute information on the disk and a second storage location of the edge attribute information on the disk; and
further storing (S203) the retrieval information corresponding to the graph data object and the storage location into the memory object defined in the memory managed by the storage engine comprises:
storing the node retrieval information corresponding to the node and the first storage location into the first memory object, and storing the edge retrieval information corresponding to the edge and the second storage location into the second memory object.

5. The method according to claim 4, wherein
the memory object is an array,
an array subscript of a first array predefined in the memory managed by the storage engine and corresponding to the node is a node identifier of the node,
an array subscript of a second array predefined in the memory managed by the storage engine and corresponding to the edge is a node identifier of a start node of the edge, and
the node identifier is a numeric ID obtained after normalization processing is performed on identification data corresponding to the node; and
storing the node retrieval information corresponding to the node and the first storage location into the first memory object, and storing the edge retrieval information corresponding to the edge and the second storage location into the second memory object comprises:
storing the node retrieval information corresponding to the node and the first storage location into the first array in the memory managed by the storage engine and corresponding to the node, and storing the edge retrieval information corresponding to the edge and the second storage location into the second array in the memory managed by the storage engine and corresponding to the edge, wherein the first storage location and the second storage location are numeric IDs obtained after normalization processing is performed.

6. The method according to claim 5, wherein
the first array comprises a first array element and a second array element, the first array element is used to store the node retrieval information corresponding to the node, and the second array element is used to store the first storage location;
the first storage location comprises a file identifier of a first file on the disk and used to store the node attribute information of the node and an offset of the node attribute information in the first file;
the second array comprises at least one third array element respectively corresponding to at least one edge connected to the start node, and the third array element is used to store the edge retrieval information and the second storage location;
the second storage location comprises a file identifier of a second file on the disk and used to store the edge attribute information of the edge and an offset of the edge attribute information in the second file;
the file identifier is a numeric ID obtained after normalization processing is performed; and the offset is a numeric ID obtained after normalization processing is performed.

7. The method according to claim 6, wherein
the node retrieval information comprises a label identifier of a node label; the edge retrieval information comprises a label identifier of an edge label;
the first array element is used to store a label identifier of a node label corresponding to the node; and
the third array element is used to store a label identifier of an edge label corresponding to the edge and the second storage location.

8. The method according to claim 7, wherein the disk stores multiple second files respectively corresponding to different edge labels; and
storing the edge attribute information into the disk managed by the storage engine comprises:
storing the edge attribute information into a second file on the disk managed by the storage engine and corresponding to the edge label.

9. The method according to claim 7 or 8, wherein the method further comprises:
in response to receiving (S401) a query statement entered by the user, determining (S402) whether the query statement comprises a target node label corresponding to a target node to be queried; and, if the query statement comprises the target node label corresponding to the target node to be queried, querying, from the first array stored in the memory managed by the storage engine, whether a first target array comprising a label identifier of the target node label exists; and
in response to finding the first target array in the memory, further determining (S403) whether the query statement comprises a target edge label corresponding to a target edge to be queried; and if the query statement comprises the target edge label, finding, from the second array stored in the memory managed by the storage engine, a second target array that has the same subscript as the first target array, and querying, from a third array element comprised in the second target array, whether a third target array element comprising a label identifier of the target edge label exists.

10. The method according to claim 9, wherein the node retrieval information further comprises a first timestamp corresponding to a maintenance moment of the node, the first array element further stores the first timestamp, and the first timestamp is a numeric ID obtained after normalization processing is performed on identification data corresponding to time; and
determining (S402) whether the query statement comprises a target node label corresponding to a target node to be queried; and, if the query statement comprises the target node label, querying, from the first array stored in the memory managed by the storage engine, whether a first target array comprising a label identifier of the target node label exists comprises:
determining whether the query statement comprises the target node label corresponding to the target node to be queried and a target time range; and,
if the query statement comprises the target node label and the target time range, querying, from the first array stored in the memory managed by the storage engine, whether there is a first target array comprising the target node label and comprising a first timestamp within the target time range.

11. The method according to claim 9, wherein after the first target array is found from the first array stored in the memory, the method further comprises:
obtaining a first target storage location stored in the first target array, and reading, based on the first target storage location, node data corresponding to the target node stored on the disk.

12. The method according to claim 9, wherein after the third target array element is found from the third array element comprised in the second target array, the method further comprises:
obtaining a second target storage location stored in the third target array element, and reading, based on the second target storage location, edge data corresponding to the target edge stored on the disk.

13. A data storage apparatus for a graph database, comprising:
a data acquisition module (501), configured to obtain graph data to be stored, wherein the graph data comprise retrieval information and attribute information corresponding to a graph data object, and the retrieval information is used to perform retrieval query on the graph data;
a disk module (502), configured to store the attribute information into a disk managed by a storage engine corresponding to the graph database, and obtain a storage location of the attribute information on the disk; and
a memory module (503), configured to further store the retrieval information corresponding to the graph data object and the storage location into a memory managed by the storage engine, so that a user can query the graph data based on the retrieval information in the memory.

14. An electronic device, comprising:
a processor; and
a memory, configured to store instructions executable by the processor; wherein
the processor runs the executable instructions to implement the method according to any one of claims 1 to 12.

15. A computer-readable storage medium on which computer instructions are stored, wherein steps of the method according to any one of claims 1 to 12 are implemented when the instructions are executed by a processor.
